# EUROPEAN PATENT SPECIFICATION

(11) **EP 1 468 619 B1**
(45) Date of publication and mention of the grant of the patent: **18.10.2006**
(21) Application number: 03425237.9
(22) Date of filing: 17.04.2003
(51) Int. Cl.: A41D 13/01

(54) **Method for producing printed retroreflective high visibility products**
Verfahren zur Herstellung von gedruckten reflektierenden gut sichtbaren Produkten
Méthode de production de produits imprimés rétroréfléchissants de visibilité élevée

(43) Date of publication of application: 20.10.2004
(73) Proprietor: Industria Bergamasca Rifrangenti S.r.l., 24040 Scanzorosciate (BG) (IT)
(72) Inventor: Bartoli, Cesare, 24040 Scanzorosciate (BG) (IT); Parisi, Agostino, 24040 Scanzorosciate (BG) (IT)
(74) Representative: Garavelli, Paolo

(56) References cited:
- WO-A-02/089338
- US-A- 4 682 852
- US-A- 5 338 595
- US-A- 6 110 558
- US-A1- 2002 037 364

## Description

The present invention refers to a method for producing printed retroreflective high visibility products.

It is verified that retroreflective products used for safety garments can reduce risk of accident especially for people who live in an outdoor society, such as firemen, paramedics, policemen and every adult and children that performs biking, hiking, running, playing or walking.

The commercial products suitable for reflective garments have generally been single colored. For example, in US-A-4.763.985, US-A-5.283.101, US-A-5.738.746. launderable retroreflective gray metal colored are disclosed. Other patents describe the possibility to obtain colored effects and printed effects as well as reflective quality.

A retroreflective structure described in US-A-5.962.121 is capable of exhibiting a decorative effect, both during the day and during the night, and particularly a rainbow colored effect. In US-A-4.605.461 a method is disclosed for transferring a retroreflective pattern onto a fabric. US-A-5.508.105 discloses a thermal printing system and a resin-based colorant/binder for printing frangible, retroreflective polymeric sheeting material. US-A-5.620.613 discloses retroreflective multi-colored designs or emblems on garments comprising a monolayer of transparent microspheres, a color layer with colorant in a transparent resin screen printed over the glass beads. When the prints of the first color are all dried, they may be printed and dried with subsequent colors until all the desired colored portions of the image are complete. For decorating textile surfaces with a transfer, US-A-5.679.198 discloses a printing step on a support sheet that has, as a layer of microspheres embedded therein, one or more colored layers that are prepared from a polyester resin and an isocyanate hardener, drying each color layer separately before the next layer is printed. The process for decorating textile surfaces with images comprising light-reflecting areas is described in US-A-5.785.790. In this case, the layers of glass microspheres are printed by one or more coatings of two-cornponent colors based on polyester resin and isocyanate hardener. A silk screen-printing machine is used for printing the layers in an image wise inverted fashion on the support sheet of the glass beads. US-A-3.689.346, US-A-5.643.400, US-A-4.082.426, US-A-2.231.139, US-A-2.422.256, US-A-4.656.072, US-A-4.952.023 and US-A-4.685.997 describe processes for producing retroreflective materials having printed patterns or graphics formed thereon. US-A-6.120.636 discloses a higher speed, low cost process for producing printed patterns for graphic, decorative and other retroreflective sheeting using partially cured pattern printed on a roll of film produced with a rotary screen printing station and UV curing. A polychromatic printed reflective material whose trade name is Flashlite® PR is manufactured by I.B.R., Italy.

A selective aluminum removal process from a metallized substrate as indicated in WO-A-02-089.338 and US-A-2002-160.786 for obtaining printed images is used in an identification device including, for example, a holografic, retroreflective metallized image. Demetallizing to create moiré patterns for security applications and external packaging is described in US-A-2002-130.104.

US-A-4.398.994, US-A-4.552.614, US-A-4.869.778 and EP-A-0936286 describe continuous procedures for the selective demetallization of etchable metal for decorative packaging and microware transparent material. Demetallizing techniques are also described in US-A-4.325.167, US-A-3.119.919, US-A-3.895.207 and US-A-5.061.837 by bringing the web into contact with two electrodes comprising rollers, one of which may be provided with a predetermined pattern and using the web material as microwave packaging material.

US-A- 5 338 595 describes a launderable retroreflective applique with metal-azo dye.

Despite the above prior art, the cited patents regarding aluminum removal process are used on a web of polymeric material without reference to a metallized monolayer of glass microspheres embedded in a carrier sheet, which is a peculiarity of the present invention, and without reference to specific reflective quality of the product useful for safety high visibility fabrics with enhanced aesthetics of clothing. Thus, there is a need for a process that permits selective or partial removal of the aluminum mirror but maintains high value of retroreflective performance. To obtain high value of retro-reflection the invention involves the application of two kinds of mirrors: the aluminum mirror making a pattern which remains on the base of the glass microspheres and the transparent dielectric mirror which covers the portions of etched surface. The dielectric mirror permits light reflection and transmission. Consequently, the color of the binder layer is visible between the small space of the beads and through the glass beads where aluminum has been removed by the etching solution. If the binder layer is not colored, the color of the base fabric combined with the printed aluminum images brings about fashionable chromatic effects with strong retro-reflex in darkness.

The printed material of the present invention has the property of reflecting the light in the same direction of the incident light and a person wearing the garment made with this material can be highly visible to drivers at night.

According to the above-cited WO-A-02-089.338, the invention relates to the manufacture of an identification device created with a metallized material such as a retroreflective material, and the demetallizing process used in this and other above-cited patents creates a metallized pattern (called "isle") in a demetallized surface (called "sea"). If the metallized isles are a small surface, the total reflection of the incident light indicated with the coefficient of retro-reflection (cd/lx.m2) is low and the final product, even if containing a retroreflective pattern, is not suitable for high visibility retroreflective applications (e.g. high visibility printed garments, products for nighttime transportation and safety).

The present inventors have discovered a process which allows combining characteristics of high visibility and polychromatic aesthetic printing. Independently of the type of printed design, either the design looks with many aluminum reflective isles or only a few, the specific requirements for the minimum value of the coefficient of retro reflection cd/lx.m2 indicated by European Standards EN 471/ 1994 (250 cd/lx.m2 , entrance angle 5°, observation angle 0.33°, class 2, regarding high visibility warning clothing) and EN 13356/ 2001 (80 cd/lx.m2, entrance angle 5°, observation angle 0.33°, type 2 and 3, referred to visibility accessories for non-professional use) are obtained.

According to the invention, a high visibility printed retroreflective product is provided that includes a retroreflective web with microspheres thereon in a desired temporary arrangement. In this invention, a temporary support sheet with a monolayer of transparent glass microspheres partially embedded in a layer of softened polymer to a depth between one-quarter and one-half of their average diameter such as are conventionally used in retroreflective materials, is coated with a thin layer of two-component polyurethane, less than about 3 g/sqm of dry substance, before the vacuum application of an aluminum-reflecting layer upon the surface of glass microspheres as described in US-A-3.700.305 and US-A-6.416.188. The temporary support sheet with a monolayer of transparent glass microspheres partially embedded in a layer of auto-adhesive, for example a layer of polyacrilic polymer supported by a polyester film instead of a layer of thermo-adhesive, can be used. In this case, a water polyurethane dispersion is used and the catalyst is an aliphatic polyisocyanate.

According to the present invention as claimed in Claim 1, a process is provided for pre-printing the metallized glass microspheres web with an etching-resistant material to the etchable metal layer corresponding to a desired pattern of non-etchable aluminum, allowing the etching solution to react with the aluminum layer to demetallized the non-protected surface, washing with water and drying the microspheres web.

It is well known that corrosion of aluminum generally occurs with acids or bases and with complex forming agents. Chemical agents able to dissolve the protective layer of the aluminum oxide will permit the corrosion of the underlining metal. In the present invention, an etching solution of sodium hydroxide is used, containing from 5% up to 25% of NaOH, but the concentration could be changed depending of the speed and of the temperature of the process. Additives are also used, such as organic complex forming agents like EDTA, which fix the Al ion in the form of soluble complexes.

According to the invention, the polyurethane resin used in the first coating upon the surface of the beads and in the binder layer is a polyester polyurethane polyol polymer 40/50% concentration in organic solvent (Methyl Ethyl Ketone, Ethyl acetate, N,N-dimethylformamide). The curing agent is an aromatic polyisocyanate or a mixture of polyisocyanate and a melamine resin. The application of the first coating if generally made with a knife-on-air coater or with a graved roll while the second binder layer is coated with a knife-on-roll coater. The industrial coating and finishing machines are widely used in the textile and synthetic leather industries.

Still according to the invention, a special feature is the double mirror layers. The first non-transparent aluminum mirror which is partially etched over the "isle surface" of the glass beads gives a high value of coefficient of retro-reflection, generally up to 500 cd/lx.m² corresponding to the requirement indicated by the EN 471/1994 regarding high visibility warning clothing. The application of a second transparent dielectric upon the "sea surface" of the glass beads reach a coefficient of retro reflection around 100-150 cd/lx.m² corresponding to the requirement indicated by European Standard EN 13356/2001, referred to visibility accessories for non-professional use.

The present invention further provides a polyurethane two-component binder and a textile base for the specific article of clothing made with the retro-reflecting printed surface. The fabric could be a plain fabric, a knitted fabric, a non-woven made with natural or synthetic fibers. The hand of the base fabric is very important for the purpose of an article of safety clothing. Examples of "article of clothing" that may use the retroreflective printed of the invention includes shirts, sweaters, coats, pants, hats, suits, shoes, bags, etc.

The invention will be further explained with reference to the figures, which are not to scale and are intended to be merely descriptive and non-limiting, and in which:
- Fig. 1 is a cross-section illustrating a schematic carrier web, which secures microspheres thereon in a desired temporary arrangement and showing one embodiment of the invention just before the demetallizing effect on the non protected aluminum layer;
- Fig. 2 is an enlarged partial view in section in accordance with the present invention as it appears after the treatment with the etching solution;
- Fig. 3 is an enlarged partial view in section in accordance with the present invention as it appears after the deposition of the dielectric layer;
- Fig. 4 is a cross section of a portion of an article 13 for clothing in accordance with the present invention having a fabric 10 with a retroreflective printed layer thereto and with a temporary carrier sheet partially removed;
- Fig. 5 is a schematic plan view showing the calender machine used for transferring the thermoadhesive pattern upon the composite microspheres web in accordance with the present invention;
- Fig. 6 is a view of a printed image upon the retroreflective layer.

In the preferred embodiments described in this invention, a specific terminology is used for the sake of clarity. The term "isles" is hereinafter used to designate the surfaces of the printed design formed by the aluminum layer protected with the non-etchable resin. The term "sea" is hereinafter used to designate the non-metallized surfaces. The embodiment examples are intended to illustrate the invention without limiting it in any way and is not intended to be limited to the specific terms so selected and it is to be understood that each term so selected includes all technical equivalents that operate similarly.

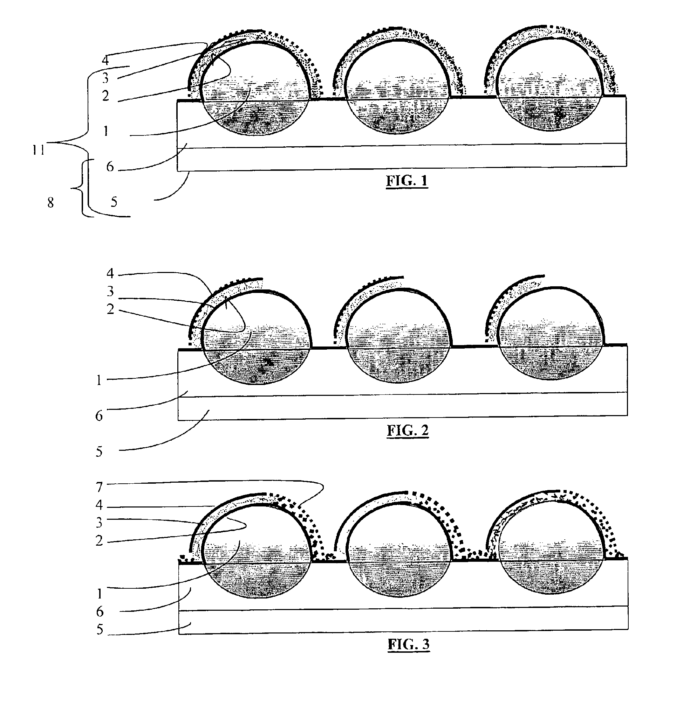

Fig. 1 shows a cross section view of the carrier web 8, which secures microspheres 1.

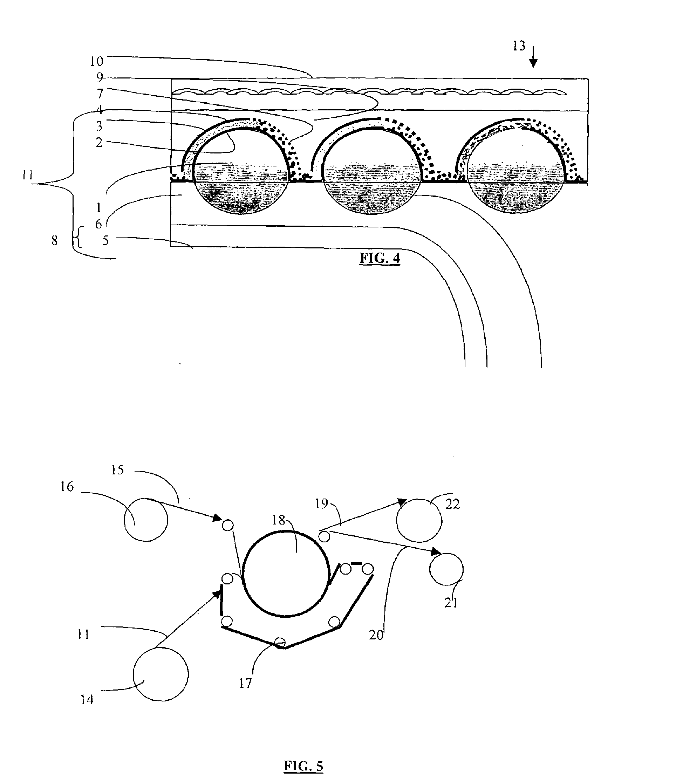

The carrier web used as a sheet material produced as described in US-A-4.102.562. The microspheres used in the present invention typically have an average diameter in the range of about 30 to 200 microns and a refractive index of about 1.5 to 2.0. Preferably glass microspheres 1 are arranged substantially in a monolayer on a temporary carrier sheet 8, which comprises a polymeric coating 6 and a stiff backing 5. The polymeric coating 6 is a softenable material such as polyethylene, polyprolylcne and the like. The stiff backing 5 could be kraft paper, polyester film and the like. The microspheres may be arranged upon the temporary carrier sheet 8 by cascading, transferring, and screening or any convenient transfer process. The microspheres 1 are embedded in the carrier sheet 8 with a pressure roll or by heating the softened polymer, preferably to a depth between about 35 to 40 percent of their average diameter. The two-component polyurethane priming layer 2 is covered with a vapor coated layer of a aluminum 3. The isles are then obtained by transfer printing the aluminum with the non-etchable layer 4 using the machine illustrated in the schematic drawing of Fig. 5.

Fig. 2 shows a cross section corresponding to Fig. 1 after the application of the etchant solution of NaOH. The aluminum layer protected by the thermoplastic resin remains whereas the non-protected aluminium is completely removed by the aqueous sodium hydroxide solution uncovering the priming layer 2.

Fig. 3 shows a cross section corresponding to Fig. 2 after the application of the transparent dielectric mirror 7, which substitutes the non-transparent aluminum mirror etched by NaOH solution and consequently increases considerably the retroreflective performance of the sea surface.

Fig. 4 shows a idealized, not-to-scale sectional view of a portion of an article of clothing 13 at the final stage of production in accordance with the present invention. In the drawing, the final product 13 is partially delaminated from the carrier web 8 comprising the polymeric coating 6 and the kraft paper or polyester film 5. A binder layer of two-components polyurethane adhesive 9 is that of providing an adequate adhesion with the fabric 10, for example a polyester/cotton, a knitted nylon fabric or a polyester nonwoven base.

Fig. 5 is a schematic plan view showing a calender for transferring the design printed 15 unrolled from cylinder 16 to the composite microspheres web 11 from cylinder 14. The apparatus used in this invention includes a well-known rotary machine made up with a heated roll 18 and a felt 17. The printed design is generally made with an acrylic resin or polyamide thermoplastic resin. We have used a special polypropylene printed film Decotrans® from Miroglio, Alba, Italy. The base without printing 19 is unrolled in 22 while the printed web 20 is unrolled in 21.

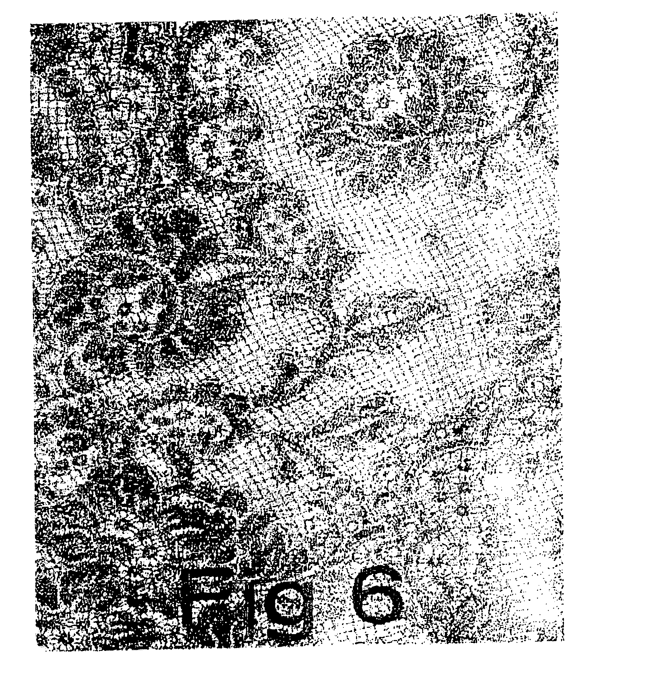

Fig. 6 is a view of a printed image upon the retroreflective layer. The "isles" of the image are the printed flowers and the "sea" the background. The coefficient of retro-reflection over the isles is around 500 cd/lx.m² and over the sea is about 100/150 cd/lx.m². If the transparent dielectric mirror is not used, the value of the coefficient of retro-reflection over the sea would be less than 15 cd/lux.m².

The invention will be further explained by the following illustrative examples, whose purpose is showing the features and advantages of this invention. However, the ingredients and the specific amounts recited therein, as well as other conditions and details, are intended to be not limiting the scope of this invention. Unless otherwise indicated, all amounts expressed in the examples are in parts by weight.

### EXAMPLE 1

In Example 1, glass spheres with a refractive index of 1.93 and a diameter from 45 up to 100 micrometers, were cascaded on a Kraft paper covered with an acrylic auto-adhesive film and produced the monolayer of glass microspheres having diameters between 40 and 100 microns. The layer of beads was then transferred onto a support sheet of polyester covered with a low-density polyethylene thermo-adhesive film material 8, in fig. 1 with a thickness of 50 microns. The transfer was made with a heated calender having a cylinder 18 and a felt 17 as in fig 5. The temperature of the heated cylinder was about 140°C. The contact time was 5 seconds and the pressure between the cylinder and the felt was 5 bars, in order to obtain a penetration of the beads onto the polyethylene film of about 40 percent of their diameter. A two-components polyurethane priming layer was next applied by roll-coating a solution of the following formulation 1 with a doctor knife-coating machine or a graved-roll coating machine:

| Ingredients | Parts by Weight |
|---|---|
| Polyurethane resin (B 10 from Coim, Italy) | 100 |
| Isocyanate curing agent ("Icaplink X3" from Icap) | 5 |
| Methyl Ethyl Ketone | 150 |
| | |
| Formulation 1 | |

The polyurethane resin was a reaction product of a polyester polyol having a number molecular weight of at least 2,000 and a polyisocyanate. The resin was dried and partially cured at 110°C. The quantity of dry transparent film layer was about 2 g/sqm. The spheres coated side was then vacuum metallized with aluminum to provide a reflective layer of about 0.5 up to 1 micrometer thickness. The reflective layer did not contact those portions of the spheres surface imbedded in the polyethylene film of the carrier. Subsequently the retroreflective portion 11 of fig. 1 was conveyed into the calender shown in fig. 5 and the thermoplastic design printed on a release polypropylene support (Decotrans ® From Miroglio, Italy) was transferred upon the surface of the aluminum layer The roll of material 21 of fig. 5 printed with a sodium hydroxide-resistant resin was next conveyed in a etchant aqueous sodium hydroxide solution, corresponding to 25 wt.% at a temperature of about 20°C. The contact time was about 30 sec. The web was then washed to leave the design of etchant-resistant thermoplastic transparent resin and dried in a continuous oven. The apparatus for demetallizing, washing and drying was the same commonly used in textile industries and utilizes rollers dipping into bath of liquids and hot air oven for the final drying step. All the process is continuous. The spent sodium hydroxide was conveyed in a waste treating plant used for water treatment in finishing textile industries.

The surface of the thermoplastic printed design (isles) was about 30% of the total surface. The image is shown in fig. 6. Consequently, the non-retroreflective surface (sea) was 70% of the total surface. To achieve the maximum retroreflective value, the printed side of the web was then vacuum coated with a transparent dielectric mirror 7, in fig. 3, of Na3AlF6 to form a first dielectric layer of about 0.8 micrometer and ZnS to form a second dielectric of about 0.5 micrometer over the sea region. The total thickness of the dielectric mirrors was about 1 micrometers.

A binder 9 in fig. 4 comprising 100 parts by weight of the following formulation :

| Ingredients | Parts by Weight |
|---|---|
| Polyurethane resin (B 10 from Coim, Italy) | 100 |
| Melamine curing agent | 3 |
| Isocyanate curing agent | 5 |
| ("Icaplink X3" from Icap) Methyl Ethyl Ketone | 40 |
| | |
| Formulation 2 | |

was applied using a knife on roll coating over the printed layer at approximately 200 microns wet thickness. The resin was dried at 80°C. At the end of the oven the surface of the resin was superposed and calendered on a polyester/cotton fabric containing 65 percent of polyester and 35 percent of cotton. After calendering the laminated compound at 100 °C and a pressure of 5 bars, the compound was cooled and the material 8 of fig. 4 was peeled off. Subsequently the printed retroreflective textile was cured at 150 °C for 2 min. The initial coefficient of retro-reflection was between 150 and 350 cd/lx.m². The maximum value was checked upon the isles of aluminum mirror and the minimum upon the sea of dielectric mirror. The material obtained with this process was suitable for visibility accessories for non-professional use corresponding to EN 13356.

### EXAMPLE 2

In Example 2, a monolayer of glass microspheres having similar characteristics to those mentioned in Example 1 was deposited onto the low density 50 microns polyethylene film supported by a 40 microns polyester carrier. The glass spheres-covered carrier was then heated for 2-4 min at 150°-160°C and penetrated into the softened polyethylene. The glass beads thus become embedded in the polyethylene for about 40 percent of the sphere diameter and form a monolayer therein with little or no space between spheres. A two-component polyurethane priming layer (formulation 1) was next applied, followed by vacuum aluminum deposition, transfer printing and etching-treatment as described in Example 1. The transfer printing Decotrans® used was a design having a large surface of isles corresponding to about 80% of the total surface.

A colored binder 9 in fig. 4 comprising 100 parts by weight of the following :

| Ingredients | Parts by Weight |
|---|---|
| Polyurethane resin (B 10 from Coim, Italy) | 100 |
| Yellow pigment (Morton, Italy) | 5 |
| Reflective Flake Powder (Bracco, Italy)) | 5 |
| Melamine curing agent | 3 |
| Isocyanate curing agent ("Icaplink X3" from Icap) | 5 |
| Methyl Ethyl Ketone | 40 |
| | |
| formulation 3 | |

was applied using a knife on roll coating over the printed layer at approximately 200 microns wet thickness. The coating with a transparent dielectric mirror and the subsequent steps of production were the same as described in Example 1. The initial coefficient of retro-reflection was around 400 cd/lx.m². The material obtained with this process was suitable for high visibility warning clothing and accessories corresponding to EN 471/1994.

### EXAMPLE 3

In Example 3, the monolayer of glass microspheres having diameters between 40 and 100 microns was produced by cascading the beads onto a polyethylene film supported by a polyester backing as indicated in Example 2. A two-component polyurethane priming layer (formulation 1) was next applied as in the first example, followed by vacuum aluminum deposition. The aluminum-coated layer of microspheres was selectively exposed to a demetallizing solution using a screen printing machine or printing roll (Stork) of a rotative textile machine. Specifically, in this example a roll printing has been used, followed by a continuous washing textile machine and a drying oven.

### EXAMPLE 4

In Example 4, the monolayer of glass microspheres having diameters between 40 and 100 microns was produced by cascading the beads onto a polyester foil covered with an acrylic auto-adhesive film as described in US-A-4.075.049. The resulting microspheres composite was doctor-knife coated with a two-components polyester-polyurethane water dispersion having the following formulation:

| Ingredients | Parts by Weight |
|---|---|
| Water dispersion polyurethane (Idrocap resin from Icap,Italy) | 100 |
| Poly-isocyanate curing agent | 5 |
| Thickening PU agent | 1-3 |
| | |
| Formulation 4 | |

The resin was dried and partially cured at 110°C. The quantity of dry transparent film layer was about 2 g/sqm as in Example 1, followed by vacuum aluminum deposition. The aluminum-coated layer of microspheres was selectively exposed to a demetallizing solution using a screen printing machine or printing roll of a rotative textile machine as mentioned in Example 3.

## Claims

1. Continuous method for producing a printed retroreflective material for making articles of clothing, said articles of clothing having aesthetic look, good laundering durability and high visibility corresponding to specific requirements for a minimum coefficient of retroreflection (cd/lx.m²) indicated by European Standard EN 471/1994 (related to high visibility warning clothing) and/or EN 13356/2001 (related to visibility accessories for non-professional use), said method comprising the steps of:
(a) providing a carrier sheet (8) with an adhesive on the carrier;
(b) partially embedding onto the adhesive a monolayer of transparent glass microspheres (1) having a refractive index between about 1.4 and about 2.7, to a depth averaging around 35-40 percent of their average diameters;
(c) coating a thin layer of a two-component polyurethane resin (2);
(d) applying a specularly reflective mirror of aluminum (3) by vacuum deposition;
(e) printing a non-etchable pattern (4) onto the aluminum layer;
(f) passing said web material through a demetallization bath of sodium hydroxide and a washing station to remove etchable, non-protected surface and drying the web;
(g) applying, by a vacuum process, two layers (7) of dielectric mirror;
(h) coating a polyurethane binder layer (9) and laminate with a textile base (10);
(i) stripping away the support layer (8).

2. Method for manufacturing a printed retroreflective material according to Claim 1, **characterized in that** the carrier sheet (8) has an heat-softenable adhesive layer on the carrier.

3. Method for manufacturing a printed retroreflective material according to Claim 1, **characterized in that** the carrier sheet (8) is an auto-adhesive layer supported by a polymer backing.

4. Method for manufacturing a printed retroreflective material according to Claim 1, **characterized in that** the polyurethane resin (2) is a reaction product of a polyester polyol having a number molecular weight of at least 2,000 and a polyisocyanate.

5. Method for manufacturing a printed retroreflective material according to Claim 4, **characterised in that** the dry polyurethane resin (2) on the glass beads is less than about 3 g/sqm of dry substance.

6. Method for manufacturing a printed retroreflective material according to Claim 1, **characterized in that** the polyurethane resin (2) used for coating the glass web is a water-dispersion and the curing agent is an aliphatic polyisocyanate.

7. Method for manufacturing a printed retroreflective material according to Claim 1, **characterized in that** the polyurethane resin (2) used for coating the glass web is a polyester polyol isocyanate in solvent and the curing agent is a polyester polyisocyanate.

8. Method for manufacturing a printed retroreflective material according to Claim 1, **characterized in that** the transfer image used for printing the coated microspheres (1) is made with a non-etchable NaOH resin.

9. Method for manufacturing a printed retroreflective material according to Claim 8, **characterised in that** the thermoplastic resin used for the printed base is a polyurethane, a polyamide or a polyacrilic polymer.

10. Method for manufacturing a printed retroreflective material according to Claim 1, **characterized in that** the base transfer non-etchable printing (4) is a release paper, a polypropylene or polyester foil.

11. Method for manufacturing a printed retroreflective material according to Claim 10, **characterised in that** the transfer printed base is Decotrans®.

12. Method for manufacturing a printed retroreflective material according to Claim 1, **characterized in that** the non-etchable transfer pattern (4) is replaced by a silk-screen printing or roll printing on the reflective aluminum layer.

13. Method for manufacturing a printed retroreflective material according to Claim 1, **characterized in that** the transparent dielectric mirror is a layer of aluminum sodium fluoride (Na₃AlF₆) overlaid by a layer of zinc sulfide (ZnS).

## Patentansprüche

1. Methode für die kontinuierliche Herstellung eines rückleuchtenden, aufgedruckten Materials für die Anfertigung von Kleidungsstücken, die gut aussehen, lange waschbeständig sind und gut sichtbar sind und die den spezifischen Vorschriften über den Mindestrückleuchtkoeffizienten (cd/lx.m²) der Europäischen Norm EN 471/1994 (über Schutzkleidung und gut sichtbare Bekleidung) und/oder EN 13356/2001 (über nicht professionelles Kleidungszubehör) entsprechen. Diese Methode umfasst folgende Phasen:
(a) Die Aufbringung einer Klebebeschichtung (8) auf die Unterlage,
(b) Den partiellen Einschluss einer Einzelschicht von Mikrokügelchen aus durchsichtigem Glas (1) mit Brechungsindex zwischen ca. 1.4 und 2.7 und mit einer durchschnittlichen Tiefe von 35-40 % ihrer durchschnittlichen Durchmesser;
(c) Die Aufbringung einer dünnen Schicht Polyurethan-Doppelkomponentharz (2);
(d) Die Aufbringung einer reflektierenden Aluminiumspiegelschicht (3) unter Vakuum;
(e) Der Druck eines nicht auf der Aluminiumschicht anhaftenden Motivs (4);
(f) Der Durchlauf dieses Materials in Bandform durch ein entmetallisierendes Bad mit Natriumhydroxyd und eine Waschstation für die Entfernung der ungeschützten, haftenden Oberfläche und Trocknung des Bandes;
(g) Die Aufbringung von zwei (7) Schichten dielektrischem Spiegel unter Vakuum;
(h) Die Beschichtung mit einer bindenden Polyurethan-Bindeschicht (9) und das Laminieren mit einer Stoffunterlage (10);
(i) Die Abtrennung der Unterlage (8).

2. Methode für die Herstellung eines rückleuchtenden, aufgedruckten Materials laut Patentbeanspruchung 1, charakterisiert durch die Tatsache, dass die Unterlagenfolie (8) eine Klebeschicht aufweist, die bei Erwärmung auf der Unterlage erweicht.

3. Methode für die Herstellung eines rückleuchtenden, aufgedruckten Materials laut Patentbeanspruchung 1, charakterisiert durch die Tatsache, dass die Unterlage (8) eine selbstklebende Schicht auf Polymerunterlage ist.

4. Methode für die Herstellung eines rückleuchtenden, aufgedruckten Materials laut Patentbeanspruchung 1, charakterisiert durch die Tatsache, dass das Polyurethanharz (2) das Reaktionsprodukt von Polyolpolyester mit einem Molekülgewicht von wenigstens 2.000 und einem Poly-Isocyanid ist.

5. Methode für die Herstellung eines rückleuchtenden, aufgedruckten Materials laut Patentbeanspruchung 4, charakterisiert durch die Tatsache, dass das trockene Polyurethanharz (2) auf den Glaskugeln weniger als 3 g/m² Trockensubstanz ist.

6. Methode für die Herstellung eines rückleuchtenden, aufgedruckten Materials laut Patentbeanspruchung 1, charakterisiert durch die Tatsache, dass das für die Bedeckung des Glasbandes benutzte Polyurethanharz (2) in Wasser eingestreut ist und das Vernetzungsmittel aliphatisches Poly-Isocyanid ist.

7. Methode für die Herstellung eines rückleuchtenden, aufgedruckten Materials laut Patentbeanspruchung 1, charakterisiert durch die Tatsache, dass das für die Bedeckung des Glasbandes benutzte Polyurethanharz (2) ein Polyol-Polyester-Isocyanid in Lösungsmittel und das Vernetzungsmittel Poly-Isocyanid-Polyester ist.

8. Methode für die Herstellung eines rückleuchtenden, aufgedruckten Materials laut Patentbeanspruchung 1, charakterisiert durch die Tatsache, dass das für die Bedruckung der beschichteten Mikrokugeln (1) benutzte, aufzubringende Motiv aus einem Harz besteht, das durch NaOH nicht angegriffen wird.

9. Methode für die Herstellung eines rückleuchtenden, aufgedruckten Materials laut Patentbeanspruchung 8, charakterisiert durch die Tatsache, dass das für die bedruckte Unterlage verwandte, warmverformbare Harz Polyurethan, Polyamid oder Polyacryl-Polymer ist.

10. Methode für die Herstellung eines rückleuchtenden, aufgedruckten Materials laut Patentbeanspruchung 1, charakterisiert durch die Tatsache, dass der aufzubringende Druck, der nicht auf der Unterlage (4) haftet, sich auf Ablösepapier, Polypropylen oder Polyesterfolie befindet.

11. Methode für die Herstellung eines rückleuchtenden, aufgedruckten Materials laut Patentbeanspruchung 10, charakterisiert durch die Tatsache, dass die aufzubringende Druckunterlage aus Decotrans® besteht.

12. Methode für die Herstellung eines rückleuchtenden, aufgedruckten Materials laut Patentbeanspruchung 1, charakterisiert durch die Tatsache, dass das nicht haftende, aufzubringende Motiv (4) durch Sieb- oder Rollendruck auf eine reflektierende Aluminiumschicht erfolgt.

13. Methode für die Herstellung eines rückleuchtenden, aufgedruckten Materials laut Patentbeanspruchung 1, charakterisiert durch die Tatsache, dass der durchsichtige, dielektrische Spiegel eine mit einer Zinksulfidschicht (ZnS) bedeckte Natriumaluminiumfluorschicht (Na₃AlF₆) ist.

## Revendications

1. Méthode pour produire en mode continu un matériau rétro-réfléchissant imprimé pour la confection d'articles d'habillement, ces articles d'habillement ayant un bon aspect esthétique, une bonne durée aux lavages et une haute visibilité correspondant aux exigences spécifiques pour un coefficient minimum de rétro-réfléchissement (cd/lx.m²) indiqués par la Norme Européenne EN 471/1994 (concernant l'habillement de protection haute visibilité) et/ou la EN 13356/2001 (concernant les accessoires d'habillement pour usage non professionnel), cette méthode comprenant les phases suivantes:
(a) Prévoir une couche de support (8) avec un adhésif sur ce support,
(b) Incorporer partiellement sur l'adhésif une mono-couche de micro-billes de verre transparentes (1) avec un indice de réfraction compris entre environ 1.4 et environ 2.7, à une profondeur en moyenne égale à environ 35-40% de leurs diamètres moyens;
(c) étaler une mince couche d'une résine polyuréthane bi-composant (2);
(d) appliquer un miroir réfléchissant spéculaire d'aluminium (3) au moyen de la déposition sous vide;
(e) imprimer un dessin non attachant (4) sur la couche d'aluminium;
(f) faire passer ledit matériau en ruban à travers un bain dé-métallisant de sodium hydroxyde et une station de lavage pour éliminer la surface non protégée attachante puis sécher ce ruban;
(g) appliquer, par un processus de vis, deux couches (7) de miroir diélectrique;
(h) revêtir une couche liante de polyuréthane (9) et laminer avec un support textile (10);
(i) détacher la couche de support (8).

2. Méthode pour produire un matériau rétro-réfléchissant imprimé selon la Revendication 1, **caractérisée en ce que** la feuille de support (8) a une couche adhésive capable de ramollir à chaud sur le support.

3. Méthode pour produire un matériau rétro-réfléchissant imprimé selon la Revendication 1, **caractérisée en ce que** la feuille de support (8) est une couche auto-collante soutenue par un support polymère.

4. Méthode pour produire un matériau rétro-réfléchissant imprimé selon la Revendication 1, **caractérisée en ce que** la résine polyuréthane (2) est un produit de réaction d'un polyester polyol avec un poids moléculaire en nombre d'au moins 2.000 et un poli-isocyanate.

5. Méthode pour produire un matériau rétro-réfléchissant imprimé selon la Revendication 4, **caractérisée en ce que** la résine polyuréthane sèche (2) sur les billes de verre est inférieure à environ 3 g/m² de substance sèche.

6. Méthode pour produire un matériau rétro-réfléchissant imprimé selon la Revendication 1, **caractérisée en ce que** la résine polyuréthane (2) utilisée pour recouvrir le ruban de verre est une dispersion aqueuse et l'agent réticulant est un poli-isocyanate aliphatique.

7. Méthode pour produire un matériau rétro-réfléchissant imprimé selon la Revendication 1, **caractérisée en ce que** la résine polyuréthane (2) utilisée pour recouvrir le ruban de verre est un isocyanate polyester polyol en solvant et l'agent réticulant est un polyester poli-isocyanate.

8. Méthode pour produire un matériau rétro-réfléchissant imprimé selon la Revendication 1, **caractérisée en ce que** l'image de transfert utilisée pour l'impression des micro-billes (1) revêtues est constituée d'une résine non attachante par le NaOH.

9. Méthode pour produire un matériau rétro-réfléchissant imprimé selon la Revendication 8, **caractérisée en ce que** la résine thermoplastique utilisée pour la base imprimée est un polyuréthane, un polyamide ou un polymère poli-acrylique.

10. Méthode pour produire un matériau rétro-réfléchissant imprimé selon la Revendication 1, **caractérisée en ce que** l'impression décalcable non attachante de base (4) est un papier détachable, polypropylène ou une feuille de polyester.

11. Méthode pour produire un matériau rétro-réfléchissant imprimé selon la Revendication 10, **caractérisée en ce que** la base imprimée décalcable est du Decotrans®.

12. Méthode pour produire un matériau rétro-réfléchissant imprimé selon la Revendication 1, **caractérisée en ce que** le dessin non attachant décalcable (4) est remplacé par une impression en sérigraphie ou une impression à rouleaux sur la couche réfléchissante d'aluminium.

13. Méthode pour produire un matériau rétro-réfléchissant imprimé selon la Revendication 1, **caractérisée en ce que** le miroir diélectrique transparent est une couche de fluorure de sodium aluminium (Na₃AlF₆) recouverte d'une couche de sulfure de zinc (ZnS).
